# FASCICULE DE BREVET EUROPEEN

(11) **EP 3 365 201 B1**
(45) Date de publication et mention de la délivrance du brevet: **18.09.2019**
(21) Numéro de dépôt: 16806219.8
(22) Date de dépôt: 21.10.2016
(51) Int. Cl.: B60R 22/46, B60R 13/02, B60R 22/26

(54) **VEHICULE COMPRENANT AU MOINS UN PRETENSIONNEUR DE CEINTURE AMELIORE**
FAHRZEUG MIT MINDESTENS EINEM VERBESSERTEN GURTSTRAFFER
VEHICLE COMPRISING AT LEAST ONE IMPROVED BELT PRETENSIONER

(30) Priorité: 22.10.2015 FR 1560095
(43) Date de publication de la demande: 29.08.2018
(73) Titulaire: RENAULT s.a.s., 92100 Boulogne-Billancourt (FR)
(72) Inventeur: LESUEUR, Gregory, 78280 Montigny Le Bretonneux (FR)
(86) Numéro de dépôt international: PCT/FR2016/052731
(87) Numéro de publication internationale: WO 2017/068298

(56) Documents cités:
- JP-A- 2004 359 028
- US-A1- 2002 140 278
- US-A1- 2004 212 188
- US-A1- 2013 270 380

## Description

L'invention se rapporte à un véhicule comprenant au moins un prétensionneur de ceinture amélioré. Préférentiellement, le véhicule est un véhicule automobile.

Le prétensionneur est un dispositif de sécurité passive, associé à une ceinture de sécurité.

Lors d'un choc frontal d'un véhicule, un occupant est susceptible d'être projeté vers l'avant avec un risque important d'impact violent contre divers éléments de structure, tels que par exemple une planche de bord ou un pare-brise. La ceinture de sécurité est conçue pour retenir l'occupant contre son siège afin d'éviter de tels impacts, et donc les blessures potentielles importantes pouvant en découler. Or, une ceinture de sécurité dispose d'un certain jeu, si bien que l'occupant n'est jamais véritablement plaqué contre son siège. De cette manière, l'enrouleur a une légère course avant de se bloquer, et la ceinture va se déformer par élasticité. Un tel jeu au niveau de la ceinture, n'empêche pas de façon certaine, la tête du conducteur ou d'un passager avant, de venir percuter le volant, le tableau de bord ou le rétroviseur central. De plus, si le véhicule dispose d'un airbag, la tête peut percuter le coussin dudit airbag en plein gonflage, ajoutant la vitesse de déploiement de la toile à celle du corps.

Le prétensionneur de ceinture est un dispositif qui se déclenche lors d'un choc du véhicule contre un obstacle extérieur, et qui tire quasi instantanément la ceinture vers l'arrière, de manière à rattraper le jeu précédemment évoqué. De cette manière, la ceinture plaque le corps de l'occupant contre le dossier de son siège, avant qu'il n'ait pu amorcer le moindre mouvement vers l'avant. Le prétensionneur assure ainsi un meilleur couplage entre l'occupant et le siège, en maintenant étroitement l'occupant contre son siège.

Actuellement, le prétensionneur est coiffé par un carter encombrant, occupant une place importante sur le coté du siège, ledit carter étant fixé à une armature du siège. Or, pour des raisons économiques, les véhicules actuels sont dimensionnés au plus juste, réduisant considérablement le volume des espaces disponibles au sein de celui-ci. Les carters existants ne sont donc plus adaptés à ces véhicules, en raison notamment de leur dimension importante. Le document US2013/270380 montre un véhicule d'après le préambule de la revendication 1.

Un véhicule selon l'invention, comprend au moins un prétensionneur de ceinture coiffé par un carter, dont les caractéristiques permettent de résoudre le problème d'implantation rencontré dans les véhicules de l'état de la technique.

L'invention a pour objet un véhicule, selon la revendication 1, comprenant au moins un siège et un prétentionneur de ceinture de sécurité associé audit siège, ledit prétensionneur étant coiffé au moins partiellement par un carter.

La principale caractéristique d'un véhicule selon l'invention est que le carter est directement et exclusivement fixé au prétensionneur. De cette manière, le carter ne dépend plus d'une armature du siège pouvant revêtir une géométrie complexe, mais est dimensionné de façon minimale, pour ne plus dépendre que de la forme, de la taille et de l'orientation du prétensionneur dans le véhicule. En n'étant plus fixé qu'au prétensionneur, le carter possède ainsi des dimensions réduites par rapport à celles des carters existants, et peut donc venir se fixer directement au prétensionneur même dans un environnement peu accessible. La fixation du carter au prétensionneur peut s'effectuer par tous les moyens, comme par exemple, par vissage ou par clippage. Le carter est réalisé dans un matériau léger et ayant une bonne tenue mécanique. Préférentiellement, le carter colle au plus près du prétensionneur en diminuant, voire en annulant les espaces disponibles entre eux. Le terme « exclusivement » signifie que le carter n'est fixé à aucune autre pièce que le prétensionneur.

Avantageusement, le carter est réalisé en matière plastique. Ce matériau peut facilement adopter n'importe quel type de forme. Il est de plus léger et possède une bonne tenue mécanique.

De façon préférentielle, le carter est directement clippé sur le prétensionneur de ceinture. Un tel moyen de fixation et facile et rapide à mettre en oeuvre car il ne nécessite ni un outillage particulier, ni aucune manipulation compliquée.

Préférentiellement, le carter épouse étroitement la forme du prétensionneur, de manière à limiter les espaces entre ledit carter et ledit prétensionneur. Autrement dit, le carter tend à être le plus proche possible du prétensionneur, de manière à diminuer, voire à éliminer le plus possible les espaces entre ledit carter et ledit prétensionneur.

De façon avantageuse, le carter présente une ouverture destinée au passage d'une tige reliant ledit prétensionneur à la ceinture de sécurité.

Avantageusement, le prétensionneur s'étend sur le coté du siège, le carter couvrant uniquement la partie visible du prétensionneur correspondant à la partie qui n'est pas en vis-à-vis dudit siège. La partie du prétensionneur située en vis-à-vis du siège est masquée par ledit siège et n'est donc pas visible et n'a donc pas besoin d'être recouverte par le carter. Le carter est assimilable à une demi-coque fermée.

De façon préférentielle, le carter possède une surface interne de laquelle émerge des reliefs aptes à coopérer avec des reliefs complémentaires du prétensionneur, pour assurer la fixation dudit carter audit prétensionneur. Préférentiellement, ces reliefs sont des clips.

Avantageusement, le carter est réalisé par surmoulage.

L'invention a pour autre objet un procédé d'implantation d'un carter pour la réalisation d'un véhicule conforme à l'invention.

La principale caractéristique d'un procédé selon l'invention est qu'il comprend une étape de clippage du carter sur le prétensionneur. L'implantation du carter sur le prétensionneur peut s'effectuer rapidement et facilement, à n'importe quel moment le long d'une chaine de montage d'un véhicule. Comme cette implantation ne nécessite aucun outil, ni aucune manipulation compliquée elle peut s'effectuer dans tout type d'environnement, y compris ceux qui sont peu accessibles.

Un véhicule selon l'invention présente l'avantage de pouvoir posséder des carters de prétensionneur pouvant se fixer facilement et efficacement sur un prétensionneur, y compris si celui-ci était peu accessible. Les carters des véhicules selon l'invention ont de plus l'avantage de se fixer, sans outil, sans effort, et sans l'aide d'un outillage particulier sur le prétensionneur occasionnant des gains de temps et de coût.

On donne, ci-après, une description détaillée, d'un mode de réalisation préféré d'un véhicule selon l'invention, en se référant aux figures suivantes.
- La figure 1 est une vue de coté d'un siège d'un véhicule de l'état de la technique,
- La figure 2 est une vue en perspective d'un carter monté sur un prétensionneur de ceinture d'un véhicule selon l'état de la technique,
- La figure 3 est une vue en perspective d'un carter monté sur un prétensionneur de ceinture d'un véhicule selon l'invention,
- La figure 4 est une vue en perspective d'un carter selon l'invention,
- La figure 5 est une vue d'un carter selon l'invention, monté sur un prétensionneur de ceinture,
- La figure 6 est une vue en perspective partielle d'un carter selon l'invention.

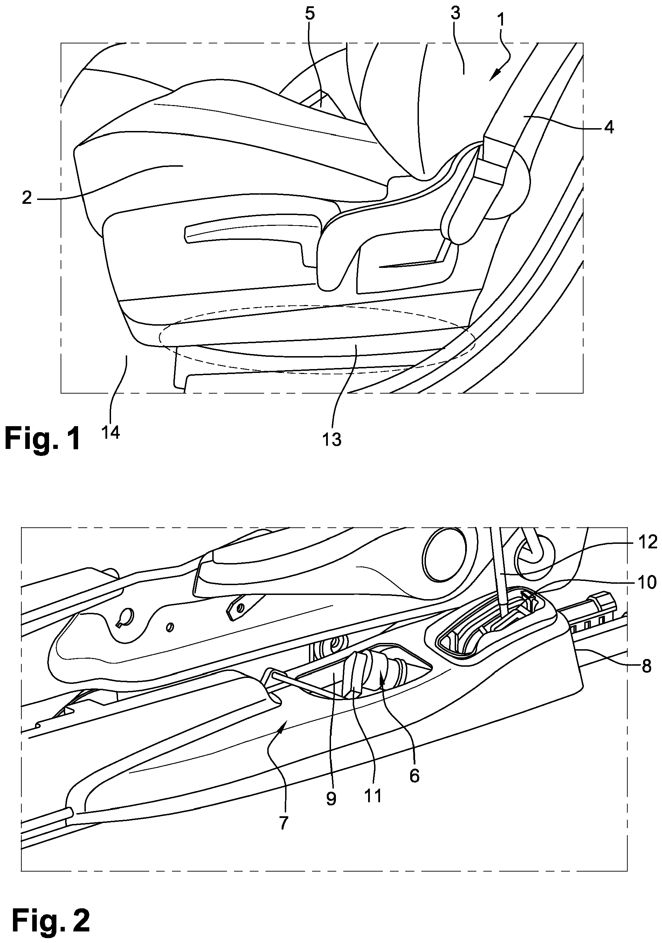

En se référant à la figure 1, un véhicule automobile d'usage courant comprend au moins un siège 1 comportant une assise 2, un dossier 3 et une armature non visible sur ladite figure. Une ceinture de sécurité 4 est associée à ce siège 1 pour assurer la sécurité d'un passager ou du conducteur assis sur ledit siège 1. Schématiquement, cette ceinture 4 est placée autour d'un enrouleur lorsqu'elle n'est pas utilisée. Une personne s'installant sur le siège 1, se saisit d'une extrémité de la ceinture 4 enroulée, qui est équipée d'une boucle. La personne déroule la ceinture 4 jusqu'à amener la boucle dans un dispositif de fixation 5 placé sur le coté du siège 1, ladite ceinture 4 servant à maintenir ladite personne contre ledit siège 1 dans le cas d'un choc du véhicule contre un obstacle extérieur. Cette ceinture 4 est associée à un prétensionneur, dont la fonction est d'exercer instantanément une tension sur ladite ceinture 4 dès qu'un choc se produit, de manière à effacer un certain jeu qui empêcherait la ceinture 4 de maintenir efficacement la personne contre le siège 1. Ce prétensionneur 6 est placé sur le coté 13 du siège 1, sensiblement au niveau du plancher 14.

En se référant à la figure 2, un prétensionneur 6 d'un véhicule de l'état de la technique est placé sur le coté du siège 1, au niveau du plancher 14, et est recouvert par un carter 7 encombrant, qui est fixé à une structure 8 du siège 1. Ce carter 7, qui est préférentiellement réalisé en matière plastique, est avant tout destiné à masquer le prétensionneur 6, qui est une pièce inesthétique, de façon à garantir un bon rendu visuel du véhicule. Il présente deux ouvertures 9, 10, l'une 9 étant destinée au passage d'un connecteur 11 du prétensionneur 6, et l'autre 10 étant destinée au passage d'une tige 12 relais, joignant la ceinture 4 au prétensionneur 6. Ce carter 7 occupe un volume important en étant étalé sur le plancher 14, et vient se fixer à la structure 8 du siège 1 en une multiplicité de points, rendant le montage de ce carter 7 long et compliqué.

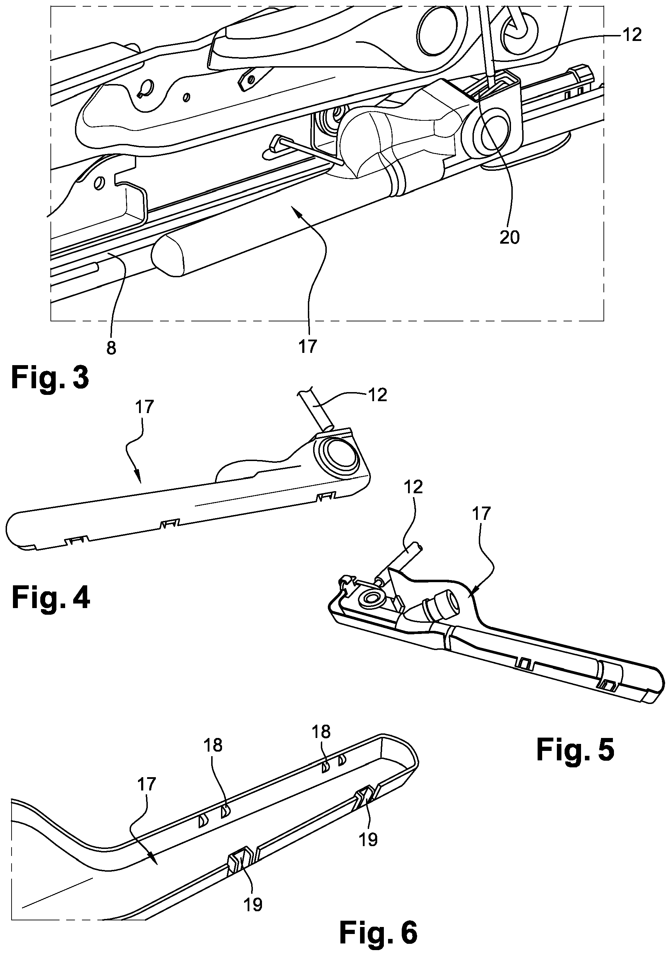

En se référant à la figure 3, un véhicule selon l'invention est dimensionné au plus juste, de manière à diminuer au maximum, voire à supprimer, certains espaces qui étaient auparavant disponibles. En effet, une tendance actuelle consiste à fabriquer des véhicules de petites dimensions, et il ne devient plus possible d'insérer le carter 7 de prétensionneur 6, tel qu'il est configuré sur les véhicules de l'état de la technique.

En se référant aux figures 3, 4, 5 et 6 un carter 17 de prétensionneur 6 d'un véhicule selon l'invention, n'est plus fixé à la structure 8 du siège 1 mais est directement et exclusivement clippé sur le prétensionneur 6. De cette manière, les dimensions et la géométrie du carter 17 ne dépendent plus de l'environnement du prétensionneur 6, mais uniquement dudit prétensionneur 6. Ce carter 17 est réalisé en matière plastique, avantageusement par surmoulage, et ses formes épousent au plus près les différents reliefs du prétensionneur 6.

En se référant aux figures 5 et 6, le carter 17 est de faible épaisseur et ne laisse subsister que très peu d'espace entre lui-même et le prétensionneur 6. En enveloppant de façon très étroite le prétensionneur 6, il est donc très peu encombrant et peut venir se fixer aisément sur ledit prétensionneur 6, même dans un environnement peu accessible.

En se référant à la figure 6, le carter 17 présente sur sa surface interne des nervures 18 de guidage permettant de bien positionner le carter 17 sur le prétensionneur 6. Le carter 17 possède également des clips 19 pour permettre sa fixation rapide sur ledit prétensionneur 6. Il est à préciser que la fixation du carter 17 sur le prétensionneur 6 ne nécessite, ni d'outillage particulier, ni une manipulation compliquée.

En se référant aux figures 3 et 4, on observe que le contour extérieur du carter 17 est imposé par la forme et les dimensions de tous les éléments constituant le prétensionneur 6, indiquant une proximité immédiate entre ledit carter 17 et ledit prétensionneur 6.

Le carter 17 est conçu pour ne masquer que la partie visible du prétensionneur 6. En effet, comme le prétensionneur 6 est placé à proximité immédiate du siège 1, la partie dudit prétensionneur 6 qui est en regard du siège 1 n'a pas besoin d'être recouverte par le carter 17, puisqu'elle est déjà masquée par ledit siège 1. Le carter 17 a pour fonction de masquer la partie extérieure du prétensionneur 6, qui est opposée à la partie située en regard dudit siège 1. Le carter 17 est ainsi assimilable à une demi-enveloppe fermée, couvrant uniquement ladite partie extérieure. Le carter 17 présente une ouverture 20 destinée au passage d'une tige 12 relais, joignant la ceinture 4 au prétensionneur 6.

Le carter 17 peut être retiré tout aussi rapidement et facilement qu'il n'a été monté, au moyen d'une simple intervention manuelle, ne nécessitant aucun effort particulier.

## Revendications

1. Véhicule comprenant au moins un siège (1) et un prétensionneur (6) de ceinture (4) de sécurité associé audit siège (1), ledit prétensionneur (6) étant coiffé au moins partiellement par un carter (7, 17), **caractérisé en ce que** le prétensionneur (6) n'est coiffé que par un seul carter réalisé en une seule pièce, qui est directement et exclusivement fixée audit prétensionneur (6).

2. Véhicule selon la revendication 1, **caractérisé en ce que** le carter (17) est réalisé en matière plastique.

3. Véhicule selon l'une quelconque des revendications 1 ou 2, **caractérisé en ce que** le carter (17) est directement clippé sur le prétensionneur (6) de ceinture (4).

4. Véhicule selon l'une quelconque des revendications 1 à 3, **caractérisé en ce que** le carter (17) épouse étroitement la forme du prétensionneur (6), de manière à limiter les espaces entre ledit carter (17) et ledit prétensionneur (6).

5. Véhicule selon l'une quelconque des revendications 1 à 4, **caractérisé en ce que** le carter (17) présente une ouverture (20) destinée au passage d'une tige (12) reliant ledit prétensionneur (6) à la ceinture (4) de sécurité.

6. Véhicule selon l'une quelconque des revendications 1 à 5, **caractérisé en ce que** le prétensionneur (6) s'étend sur le coté (13) du siège (1), et **en ce que** le carter (17) couvre uniquement la partie visible du prétensionneur (6) correspondant à la partie qui n'est pas en vis-à-vis dudit siège (1).

7. Véhicule selon l'une quelconque des revendications 1 à 6, **caractérisé en ce que** le carter (17) possède une surface interne de laquelle émerge des reliefs (18, 19) aptes à coopérer avec des reliefs complémentaires du prétensionneur (6) pour assurer la fixation dudit carter (17) audit prétensionneur (6).

8. Procédé de fixation d'un carter (17) pour la réalisation d'un véhicule conforme à l'une quelconque des revendications 1 à 7, **caractérisé en ce qu'**il comprend une étape de clippage du carter (17) sur le prétensionneur (6).

## Patentansprüche

1. Fahrzeug, das mindestens einen Sitz (1) und einen dem Sitz (1) zugeordneten Straffer (6) eines Sicherheitsgurts (4) enthält, wobei der Straffer (6) zumindest teilweise von einem Gehäuse (7, 17) überdeckt wird, **dadurch gekennzeichnet, dass** der Straffer (6) von nur einem aus einem Stück hergestellten Gehäuse überdeckt wird, das direkt und ausschließlich am Straffer (6) befestigt wird.

2. Fahrzeug nach Anspruch 1, **dadurch gekennzeichnet, dass** das Gehäuse (17) aus Kunststoff hergestellt wird.

3. Fahrzeug nach einem der Ansprüche 1 oder 2, **dadurch gekennzeichnet, dass** das Gehäuse (17) direkt auf dem Straffer (6) eines Gurts (4) eingeklinkt wird.

4. Fahrzeug nach einem der Ansprüche 1 bis 3, **dadurch gekennzeichnet, dass** das Gehäuse (17) sich eng an die Form des Straffers (6) anpasst, um die Zwischenräume zwischen dem Gehäuse (17) und dem Straffer (6) zu begrenzen.

5. Fahrzeug nach einem der Ansprüche 1 bis 4, **dadurch gekennzeichnet, dass** das Gehäuse (17) eine Öffnung (20) aufweist, die für den Durchgang einer Stange (12) bestimmt ist, die den Straffer (6) mit dem Sicherheitsgurt (4) verbindet.

6. Fahrzeug nach einem der Ansprüche 1 bis 5, **dadurch gekennzeichnet, dass** der Straffer (6) sich an der Seite (13) des Sitzes (1) erstreckt, und dass das Gehäuse (17) nur den sichtbaren Teil des Straffers (6) bedeckt, der dem Teil entspricht, der nicht dem Sitz (1) gegenüberliegt.

7. Fahrzeug nach einem der Ansprüche 1 bis 6, **dadurch gekennzeichnet, dass** das Gehäuse (17) eine Innenfläche besitzt, von der Reliefs (18, 19) hervortreten, die mit komplementären Reliefs des Straffers (6) zusammenwirken können, um die Befestigung des Gehäuses (17) am Straffer (6) zu gewährleisten.

8. Verfahren zur Befestigung eines Gehäuses (17) für die Herstellung eines Fahrzeugs nach einem der Ansprüche 1 bis 7, **dadurch gekennzeichnet, dass** es einen Schritt des Einklinkens des Gehäuses (17) auf dem Straffer (6) enthält.

## Claims

1. Vehicle comprising at least one seat (1) and a pretensioner (6) for a safety belt (4) associated with said seat (1), said pretensioner (6) being capped at least partially by a housing (7, 17), **characterized in that** the pretensioner (6) is capped only by a single housing made in one piece, which is attached directly and exclusively to said pretensioner (6).

2. Vehicle according to Claim 1, **characterized in that** the housing (17) is made of a plastics material.

3. Vehicle according to any one of Claims 1 or 2, **characterized in that** the housing (17) is clipped directly onto the pretensioner (6) of the belt (4).

4. Vehicle according to any one of Claims 1 to 3, **characterized in that** the housing (17) closely adopts the form of the pretensioner (6), in such a way as to limit the spaces between said housing (17) and said pretensioner (6).

5. Vehicle according to any one of Claims 1 to 4, **characterized in that** the housing (17) has an opening (20) intended for the passage of a rod (12) connecting said pretensioner (6) to the safety belt (4).

6. Vehicle according to any one of Claims 1 to 5, **characterized in that** the pretensioner (6) extends on the side (13) of the seat (1), and **in that** the housing (17) covers only the visible part of the pretensioner (6) corresponding to the part which is not arranged facing said seat (1).

7. Vehicle according to any one of Claims 1 to 6, **characterized in that** the housing (17) possesses an internal surface, from which there emerge catches (18, 19) adapted to cooperate with complementary catches of the pretensioner (6) in order to ensure the attachment of said housing (17) to said pretensioner (6).

8. Method of attachment of a housing (17) for the production of a vehicle according to any one of Claims 1 to 7, **characterized in that** it comprises a stage of clipping the housing (17) onto the pretensioner (6).
